# EUROPEAN PATENT APPLICATION

(11) **EP 4 631 703 A1**
(43) Date of publication of application: **15.10.2025**
(21) Application number: 25168522.8
(22) Date of filing: 04.04.2025
(51) Int. Cl.: B29C 65/36, B29C 65/48, B29C 65/50, F16L 47/03, F16L 47/02, F16L 55/115, B29L 23/00, B29L 31/24

(54) **PIPE FITTING WITH FUSIBLE SLEEVE**

(30) Priority: 12.04.2024 CA 3235455; 12.04.2024 US 202418634132
(71) Applicant: Ipex Technologies Inc., Mississauga, Ontario L5N 2L8 (CA)
(72) Inventor: Simon, Jis, Mississauga, Ontario, L5N 7V9 (CA); Martino, Filippo, Oakville, Ontario, L6H 7V7 (CA)
(74) Representative: Grünecker Patent- und Rechtsanwälte PartG mbB

(57) **Abstract**

A pipe fitting comprises a coupling body (40) and a fusible sleeve (60) sized to be received within the coupling body (40), the coupling body (40) comprising a sidewall (42) defining a bore (48) for receiving a pipe with the fusible sleeve (60) interposed between the two. The fusible sleeve (60) comprises a thermoplastic material combined with electrically conductive material, such as metal powder, stainless steel fibre or carbon fibre, arranged to melt the thermoplastic material upon induction heating. The fusible sleeve (60) has a tapered outer surface (74) for frictional engagement with an inner surface (52) of the sidewall.

The frictional fit permits the coupling body (40) to be adjustably pre-mounted to the pipe without employing clamps, prior to induction welding being conducted. The coupling body (40) may take the form of an elbow, a T-connector, a cap (shown), amongst others.

## Description

### SCOPE OF THE INVENTION

The present invention relates to a pipe fitting, which most preferably includes a fusible sleeve for electrofusion of a coupling body and a pipe upon induction heating.

### BACKGROUND OF THE INVENTION

A pipe fitting or adapter may be used in a piping or plumbing system, such as a drain-waste-vent (DWV) system, in order to manipulate or regulate fluid flow in the system in the conveyance of, for example, water, gas and/or liquid waste in a domestic or commercial setting. For instance, a DWV system utilize in a domestic setting may typically include a number of straight sections of plastic pipes formed mainly with polyvinyl chloride (PVC), chlorinated polyvinyl chloride (CPVC) and/or acrylonitrile butadiene styrene (ABS), and which are of differing orientations, locations, sizes and/or shapes. A pipe coupling may be used to fluidically couple multiple sections of plastic pipes as part of the DWV system, to for example, convey water from the water main to be supplied to a bathroom.

Various pipe fittings are commercially available to permit different required manipulation or regulation of fluid flow, including an elbow, a coupling, a reducer, a tee, a wye and a tee-wye. For instance, pipe couplings are commercially available to simply connect two pipes of the same or different sizes, by providing a straight coupling body fluidically coupling the two pipes. As a further example, an elbow or a sweep elbow may be utilized to redirect fluid flow from a vertically oriented plastic pipe to a horizontally oriented plastic pipe, by providing a fitting body curved at 90° fluidically coupled to both the vertically oriented and horizontally plastic pipes.

To fluidically couple or join the pipes with a pipe fitting, various connection techniques are available, such as threaded connection, solvent welding and others, often dependent on the pipe material. For instance, with a DWV system typically utilizing plastic pipes, pipe-to-pipe and pipe-to-fitting connections may be established with use of a solvent cement, an adhesive, fusion or other bonding techniques to achieve a relatively permanent connection. To implement a less permanent and removable connection, various techniques that are more mechanical in nature have been proposed.

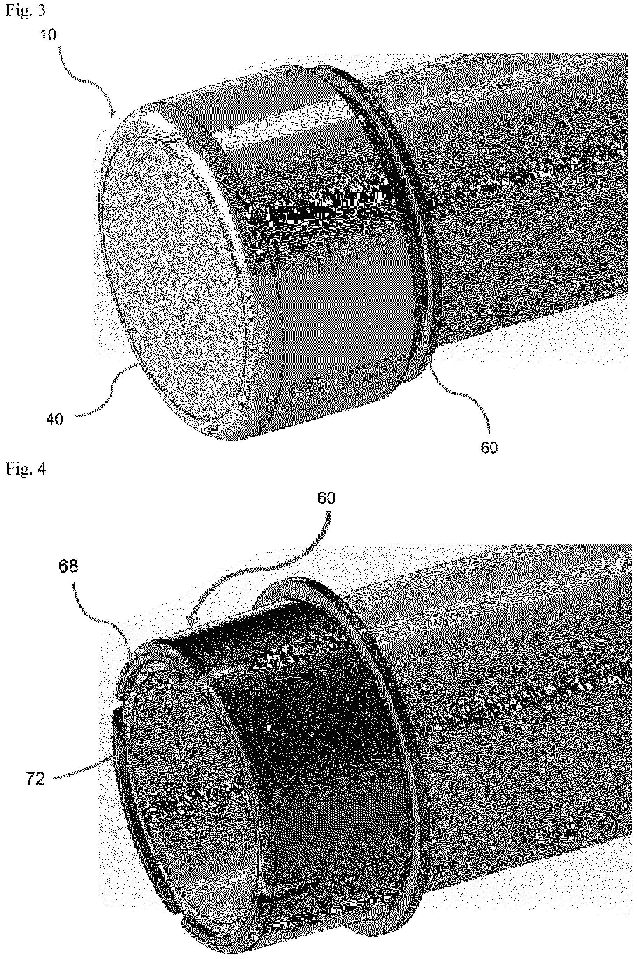

For instance, International Publication No. WO 2009/108963 to Van Wyk describes a pipe coupling body 10 for receiving a pipe 12, and a gripping member 20 for holding the pipe 12 in the bod 10. The gripping member is formed with a sleeve 32 and a grip ring 30 located at an axial end of the sleeve 32, where the ring 30 has teeth 34 extending radially inwardly at an angle in the direction of pipe insertion. For securing the grip member 20 over an opening of the body 10, the body 10 has radial ridges 24, and the sleeve 32 defines keyhole slots 36 sized to receive the ridges 24 therein. Figure 3 shows an alternative embodiment of the gripping member 20 having the grip ring 30 and not the sleeve 32, and which rather includes multiple feet 46 extending from a periphery of the ring 30. Each foot 46 has an inwardly oriented projection for engaging a distal sidewall of the ridge 24, and thus, locking the member 20 to the body 10.

U.S. Patent No. 10,047,884 to Taylor describes a push connector 100 having a housing body 102, sealing members 104, a locking member 106 and a retaining member 108. The body 102 has threaded portions 134, 136 near axial ends of the body 102, and defines an axial bore 110 to receive the sealing member 104 and the locking member 106. The member 106 includes an annular ring 142 and locking teeth 146 operable as a one-way stop for a tube to be received in the bore 110, and the ring 142 is sized to be positioned on a top abutment 154 near the axial end of the body 102. To retain the member 104, 106 in the axial bore 110, the retaining member 108 has an internally threaded portion 150 for threaded engagement with the threaded portion 134 of the body 102, and the tube can be inserted into the bore 110 to be retained therein by the locking member 106. To remove the tube, the retaining member 108 may be removed from the body 102, and the connector 100 can optionally include a release mechanism for disengaging the teeth 146 from the pipe.

U.S. Patent No. 7,195,287 to Wai describes a fitting for coupling a pipe to a pipe joint 6 having internal threads near a joint opening. The fitting is provided with a combination of outer and inner rings 1,2, an internal teethed lock ring 3, a locking sleeve 4 and an elastic sealing ring 5. The ring 5 is shaped for sealingly abutting an end of the pipe when placed in the joint 6, and the locating sleeve 4 is for positioning between the sealing ring 5 and the lock ring 3, and the inner ring 2 engages the lock ring 3 opposite the sleeve 4. The inner ring 2 has an axial end face tapering towards the lock ring 3, and which is configured to urge the internal teeth of the lock ring 3 radially outwardly when pressed against the teeth. The inner ring 2 has outer threads for complementary engagement with internal threads of the outer ring 1, and the outer ring 1 has outer threads for complementary engagement with the internal threads of the joint 6. After components 1 to 5 are placed into the pipe joint 6 with the outer threads o f the outer ring 1 engaging the internal threads of the pipe joint 6, the ring 1 can be integrated to the joint 6 by for example using glue to prevent the ring 1 from being removed from the joint 6. The pip can then be inserted into the joint 6 through the components 1 to 5, with the internal teeth of the lock ring 3 engaging an outer surface of the pipe. The pipe can be removed form the joint 6 by threaded rotation, and thus longitudinal movement, of the inner ring 2 relative to the outer ring 3, such that the ring 2 presses against the lock ring 3 to release the internal teeth from the pipe.

### SUMMARY OF THE INVENTION

One possible non-limiting object of the present invention is to provide a pipe fitting which may permit more ready or convenient fluid sealing engagement with a pipe or pipes, such as a plastic pipe or a PVC, CPVC or ABS pipe for use in a DWV system.

Another possible non-limiting object of the present invention is to provide a pipe fitting which may permit more secure or permanent fluid sealing engagement with a pipe or pipes with electrofusion, and without necessary requiring use of encapsulated heating elements, clamps or other holding devices for or during induction heating.

Another possible non-limiting object of the present invention is to provide a pipe fitting which may permit disconnection for adjustments prior establishing connection to the pipe, and which, at the same time, may allow for improved resistance to fluid leaks after the connection to the pipe is established.

In one aspect, the present invention provides a pipe fitting comprising a coupling body having an open end and a fusible sleeve sized to be received at the open end for engagement of a pipe thereto, the coupling body comprising a sidewall defining an internal bore sized for receiving at least a portion of the pipe with the fusible sleeve interposed between the sidewall and the pipe in an engaged position, the fusible sleeve having a tapered outer surface for frictional engagement with an inner surface of the sidewall, wherein the fusible sleeve comprises a thermoplastic material and an electrically conductive material combined with the thermoplastic material, the electrically conductive material being located to heat or melt the thermoplastic material upon induction heating of the electrically conductive material, thereby joining the coupling body and the pipe in the engaged position.

In another aspect, the present invention provides a fusible sleeve for electrofusion of a pipe and a pipe fitting, the pipe fitting comprising a coupling body having an open end, the coupling body comprising a sidewall defining an internal bore sized for receiving at least a portion of the pipe with the fusible sleeve interposed between the sidewall and the pipe in an engaged position at the open end, wherein the fusible sleeve has a tapered outer surface for frictional engagement with an inner surface of the sidewall, and the fusible sleeve comprises a thermoplastic material and an electrically conductive material combined with the thermoplastic material, the electrically conductive material being located to heat or melt the thermoplastic material upon induction heating of the electrically conductive material to thereby join the coupling body and the pipe in the engaged position.

In one embodiment, the coupling body comprises an elbow, a sweep elbow, a coupling, a reducer, a tee, a cross, a wye or a cap. In one embodiment, the coupling body comprises a cap. It is to be appreciated that the coupling body is not strictly required to include one or more of the foregoing, provided that the coupling body is provided with the open end for operation with the pipe and the fusible sleeve. The coupling body is not to be read as necessarily implying operation for fluidically coupling two or more pipes, and rather, the coupling body, for instance, in the example of a cap, may operate to engage a pipe. It is to be also appreciated that the specific dimensions, shape and materials of the pipe and pipe fitting are not particularly limited.

In one embodiment, the thermoplastic material comprises one or more selected from the group consisting of polyacrylic acid, poly(methyl methacrylate) (PMMA), acrylonitrile butadiene styrene (ABS), polyamide, polylactic acid, polybenzimidazole (PBI), polycarbonate (PC), polyether sulfone (PES), polyoxymethylene (POM), polyether ether ketone (PEEK), polyetherimide (PEI), polyphenylene oxide (PPO), polyphenylene sulfide (PPS), polystyrene, polypropylene, polyvinyl chloride (PVC), chlorinated PVC (CPVC), polyvinylidene fluoride (PVDF) and polytetrafluoroethylene (PTFE). In one embodiment, the thermoplastic material comprises polypropylene.

It is to be appreciated that the electrically conductive material is not strictly limited, provided the material permits sufficient electrical conductivity in the fusible sleeve for induction heating of the thermoplastic material. In one embodiment, the electrically conductive material comprises an electrically conductive metal or non-metal material. In one embodiment, the electrically conductive metal material is a metal powder or fiber comprising one or more of copper, iron, tungsten, chromium, nickel, cobalt, platinum, silver, gold, aluminum and stainless steel. In one embodiment, the electrically conductive non-metal material is a carbon-based electrically conductive material. In one embodiment, the electrically conductive non-metal material comprises one or more of carbon black, high structure carbon black, carbon fiber, milled carbon fiber, chopped carbon fiber, graphite, graphene, graphene fiber and carbon nanotube. In one embodiment, the electrically conductive material comprises one or more of copper, aluminum, iron, tungsten, chromium, nickel, cobalt, platinum, silver, gold, carbon black, carbon fiber, graphite, graphene and carbon nanotube. In one embodiment, one or both of the electrically conductive metal and non-metal materials are dispersed or finely dispersed in the thermoplastic material. In one embodiment, the electrically conductive metal material is dispersed or finely dispersed in the thermoplastic material. In one embodiment, the electrically conductive material comprises stainless steel or stainless steel fiber dispersed or finely dispersed in the thermoplastic material.

In one embodiment, the electrically conductive material comprises stainless steel fiber dispersed or finely dispersed in the thermoplastic material, the thermoplastic material comprising polypropylene.

In one embodiment, the fusible sleeve comprises first and second axial ends, the first axial end being for placement proximate to a longitudinal end of the pipe relative to the second axial end in the engaged position, wherein the fusible sleeve tapers towards the first axial end. In one embodiment, the fusible sleeve tapers towards the first axial end at a tapering angle between about 0.01° and about 7°, the tapering angle being measured along a line parallel to a longitudinal axis of the fusible sleeve.

In one embodiment, the inner surface of the sidewall is a tapered inner surface shaped for complementary interlocking frictional engagement with the tapered outer surface of the fusible sleeve. In one embodiment, the tapered inner surface has a further tapering angle substantially identical to the tapering angle of the fusible sleeve. In an alternative embodiment, the further tapering angle is different from the tapering angle of the fusible sleeve. In one embodiment, the further tapering angle is less than the tapering angle of the fusible sleeve. In one embodiment, the further tapering angle is greater than the tapering angle of the fusible sleeve. In one embodiment, the tapered inner and outer surfaces cooperatively form a self-holding or self-locking machine taper. In one embodiment, the frictional engagement between the tapered outer surface of the fusible sleeve and the tapered inner surface of the sidewall is substantially without interference fit. In an alternative embodiment, the frictional engagement between the tapered outer surface of the fusible sleeve and the tapered inner surface of the sidewall comprises interference fit.

It is to be appreciated that engagement between the fusible sleeve and the pipe may be similar to that between the fusible sleeve and the coupling body, and thus, may involve one or more of machine taper and interference fit.

In one embodiment, the fusible sleeve further comprises a seating flange extending inwardly at the first axial end, the seating flange being shaped for seated engagement of the longitudinal end of the pipe thereto in the engaged position.

In one embodiment, the fusible sleeve defines a plurality of notches at the first axial end along a periphery thereof, the plurality of notches extending towards the second axial end.

In aspect (1), there is provided a pipe fitting comprising a coupling body having an open end and a fusible sleeve sized to be received at the open end for engagement of a pipe thereto, the coupling body comprising a sidewall defining an internal bore sized for receiving at least a portion of the pipe with the fusible sleeve interposed between the sidewall and the pipe in an engaged position, the fusible sleeve having a tapered outer surface for frictional engagement with an inner surface of the sidewall, wherein the fusible sleeve comprises a thermoplastic material and an electrically conductive material combined with the thermoplastic material, the electrically conductive material being located to heat or melt the thermoplastic material upon induction heating of the electrically conductive material, thereby joining the coupling body and the pipe in the engaged position.

In Aspect (2), there is provided a fusible sleeve for electrofusion of a pipe and a pipe fitting, the pipe fitting comprising a coupling body having an open end, the coupling body comprising a sidewall defining an internal bore sized for receiving at least a portion of the pipe with the fusible sleeve interposed between the sidewall and the pipe in an engaged position at the open end,
wherein the fusible sleeve has a tapered outer surface for frictional engagement with an inner surface of the sidewall, and the fusible sleeve comprises a thermoplastic material and an electrically conductive material combined with the thermoplastic material, the electrically conductive material being located to heat or melt the thermoplastic material upon induction heating of the electrically conductive material to thereby join the coupling body and the pipe in the engaged position.

In aspect (3), there is provided a pipe fitting or a fusible sleeve according to one or more of aspects (1), (2) and (4) to (12) in any combination, wherein the coupling body comprises an elbow, a sweep elbow, a coupling, a reducer, a tee, a cross, a wye or a cap.

In aspect (4), there is provided a pipe fitting or a fusible sleeve according to one or more of aspects (1) to (3) and (5) to (12) in any combination, wherein the coupling body comprises a cap.

In aspect (5), there is provided a pipe fitting or a pipe fitting assembly according to one or more of aspects (1) to (4) and (6) to (12) in any combination, wherein the thermoplastic material comprises one or more selected from the group consisting of polyacrylic acid, poly(methyl methacrylate) (PMMA), acrylonitrile butadiene styrene (ABS), polyamide, polylactic acid, polybenzimidazole (PBI), polycarbonate (PC), polyether sulfone (PES), polyoxymethylene (POM), polyether ether ketone (PEEK), polyetherimide (PEI), polyphenylene oxide (PPO), polyphenylene sulfide (PPS), polystyrene, polypropylene, polyvinyl chloride (PVC), chlorinated PVC (CPVC), polyvinylidene fluoride (PVDF) and polytetrafluoroethylene (PTFE).

In aspect (6), there is provided a pipe fitting or a pipe fitting assembly according to one or more of aspects (1) to (5) and (7) to (12) in any combination, wherein the thermoplastic material comprises polypropylene.

In aspect (7), there is provided a pipe fitting or a pipe fitting assembly according to one or more of aspects (1) to (6) and (8) to (12) in any combination, wherein the electrically conductive material comprises one or more of copper, aluminum, iron, tungsten, chromium, nickel, cobalt, platinum, silver, gold, carbon black, carbon fiber, graphite, graphene and carbon nanotube.

In aspect (8), there is provided a pipe fitting or a pipe fitting assembly according to one or more of aspects (1) to (7) and (9) to (12) in any combination, wherein the electrically conductive material comprises stainless steel or stainless steel fiber dispersed in the thermoplastic material.

In aspect (9), there is provided a pipe fitting or a pipe fitting assembly according to one or more of aspects (1) to (8) and (10) to (12) in any combination, wherein the fusible sleeve comprises first and second axial ends, the first axial end being for placement proximate to a longitudinal end of the pipe relative to the second axial end in the engaged position, wherein the fusible sleeve tapers towards the first axial end.

In aspect (10), there is provided a pipe fitting or a pipe fitting assembly according to one or more of aspects (1) to (9), (11) and (12) in any combination, wherein the fusible sleeve tapers towards the first axial end at a tapering angle between about 0.01° and about 7°, the tapering angle being measured along a line parallel to a longitudinal axis of the fusible sleeve.

In aspect (11), there is provided a pipe fitting or a pipe fitting assembly according to one or more of aspects (1) to (10) and (12) in any combination, wherein the fusible sleeve further comprises a seating flange extending inwardly at the first axial end, the seating flange being shaped for seated engagement of the longitudinal end of the pipe thereto in the engaged position.

In aspect (12), there is provided a pipe fitting or a pipe fitting assembly according to one or more of aspects (1) to (11) in any combination, wherein the fusible sleeve defines a plurality of notches at the first axial end along a periphery thereof, the plurality of notches extending towards the second axial end.

Additional and alternative features of the present invention will be apparent to a person skilled in the art from the following detailed description of the preferred embodiments thereof.

### BRIEF DESCRIPTION OF THE DRAWINGS

Reference may now be had to the following detailed description taken together with the accompanying drawings in which:
Figure 1 is a partial lateral cross sectional view of a pipe cap in accordance with a preferred embodiment of the present invention;
Figure 2 is a perspective view of the pipe cap shown in Figure 1;
Figure 3 is another perspective view of the pipe cap shown in Figure 1;
Figure 4 is another perspective view of the pipe cap shown in Figure 1, and without a fitting body;
Figure 5 is a perspective view of a fitting body included with the pipe cap shown in Figure 1;
Figure 6 is a perspective view of a fusible sleeve included with the pipe cap shown in Figure 1; and
Figure 7 is a perspective view of a fusible sleeve of an alternative embodiment to that shown in Figure 6.

### DETAILED DESCRIPTION OF THE PREFERRED EMBODIMENTS

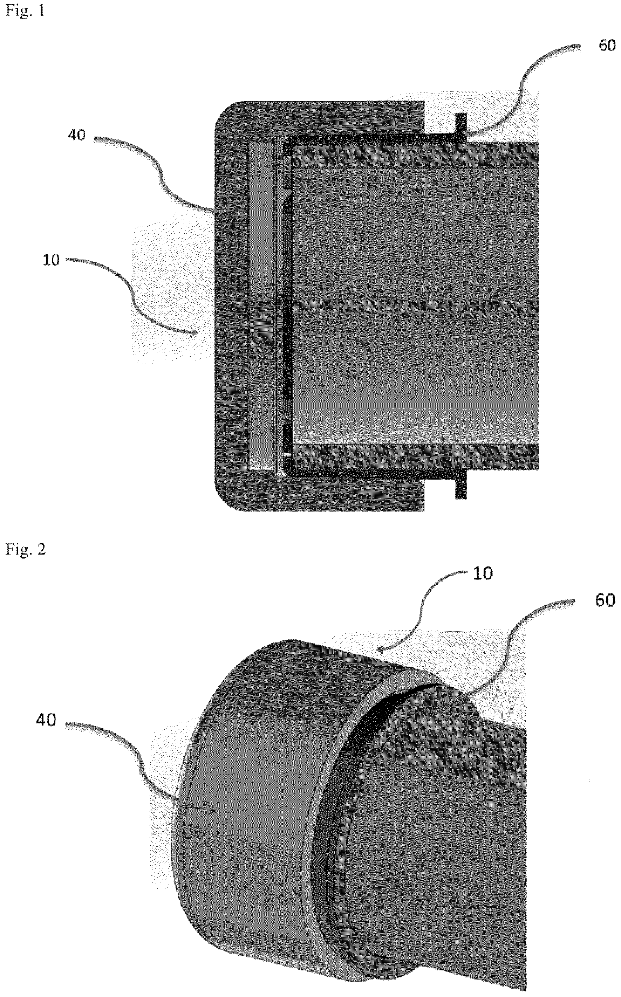

Reference is made to Figure 1 which shows a partial lateral cross sectional view of a pipe cap 10 for engagement with a PVC, CPVC or ABS pipe, in accordance with a preferred embodiment of the present invention. In the construction shown, and as will be further described below, the pipe cap 10 includes a fitting body 40 and a fusible sleeve 60 in complementary self-holding frictional engagement with the fitting body 40 for ensuing electrofusion.

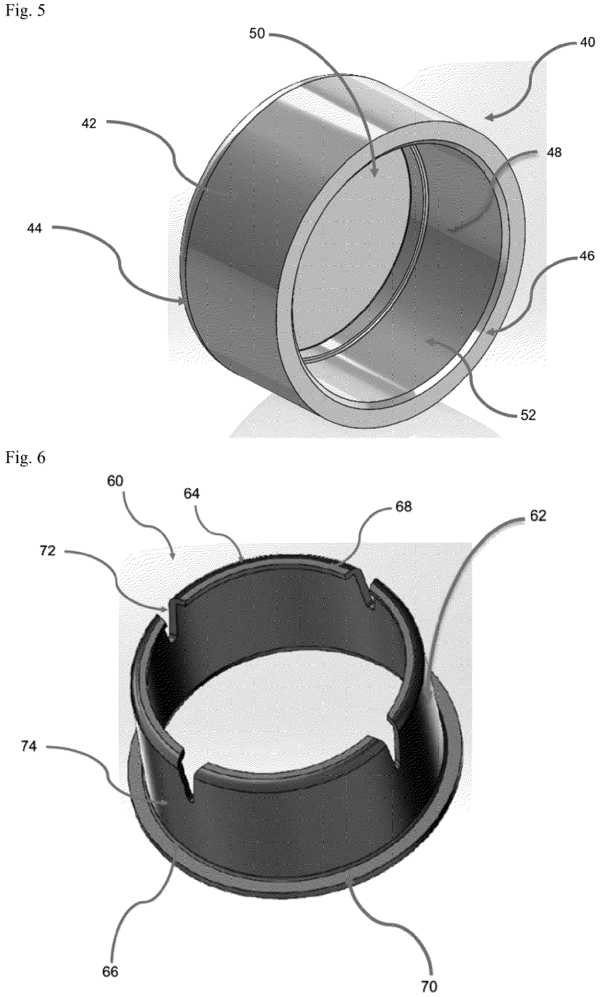

As seen in Figures 1 to 3 and 5, the fitting body 40 has a generally cylindrical shape formed with a sidewall 42 having opposed first and second longitudinal ends 44, 46 and defining an internal bore 48 therebetween. The fitting body 40 also includes an end wall 50 at the first longitudinal end 44 oriented substantially normal to the sidewall 42, such that the first longitudinal end 44 forms a closed end, whereas the second longitudinal end 46 forms an open end. As will be further described below, the sidewall 42 comprises a tapered inner surface 52 shaped for complementary self-holding frictional engagement with the fusible sleeve 60, the tapered inner surface 52 tapering from the second longitudinal end 46 towards the first longitudinal end 44, *i.e.,* the diameter of the internal bore 48 decreases towards the first longitudinal end 44.

As seen from Figures 1, 4 and 6, the fusible sleeve 60 is formed with a sleeve sidewall 62 having first and second axial ends 64, 66, and which includes a seating flange 68 extending inwardly at the first axial end 64. As will be further described below, the seating flange 68 is shaped for seated engagement of a longitudinal end of the pipe when received by the fusible sleeve 60 in an engaged position. At the opposed second axial end 66, the fusible sleeve 60 is further provided with an outwardly extending stop flange 70. The fusible sleeve 60 defines a plurality of wedge-shaped notches 72 extending from the first axial end 64 through the seating flange 68 towards the second axial end 66, so as to facilitate radially inward compression at the first axial end 64 during insertion of the sleeve 60 into the fitting body 40 and radially outward expansion at the same during insertion of the pipe into the fusible sleeve 60, as will be further described below. As also will be further described below, the sleeve sidewall 62 comprises a tapered outer surface 74 shaped for complementary self-holding frictional engagement with the fitting body 40, the tapered outer surface 74 tapering from the second axial end 66 towards the first axial end 64, *i.e.,* the outer diameter of the fusible sleeve 60 decreases towards the first axial end 64. Although not explicitly seen or be possibly shown in the included figures, the fusible sleeve 60 is formed with polypropylene and stainless steel fiber finely dispersed therein. Stainless steel fiber is included in the fusible sleeve 60 to impart sufficient electrical conductivity thereto for inductive heating, as will be further described below.

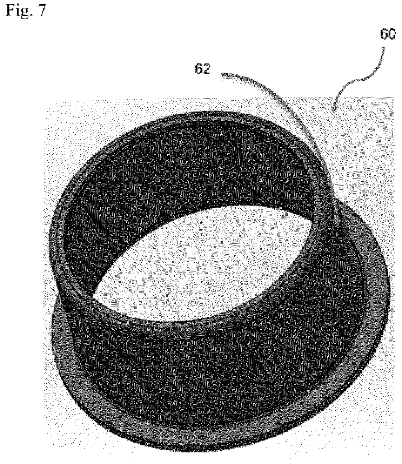

In an alternative embodiment as seen in Figure 7, the fusible sleeve 60 may be provided without defining the notches 72.

For installation, the pipe is inserted into the fusible sleeve 60, until the longitudinal end of the pipe is seated against the seating flange 68, as seen in Figure 4. During pipe insertion, the notches 72 permit radial expansion at the first axial end 64 of the sleeve 60 to reduce the force required to insert the pipe, especially if the inner diameter at the first axial end 64 does not match or is smaller than the outer diameter of the pipe at the longitudinal end. Once inserted, the fusible sleeve 60 with the pipe received therein is inserted into the internal bore 48 of the fitting body 40 (as seen in Figure 3), such that the tapered inner surface 52 of the fitting body 40 is in frictional engagement with the tapered outer surface of 74 of the fusible sleeve 60. During insertion into the fitting body, the notches 72 permit for radially inward compression of the sleeve 60 at the first axial end 64, especially if the inner diameter of the fitting body 40 does not match or is smaller than the outer diameter of the sleeve 60 at the first axial end 64. The tapering angle of both of the tapered inner and outer surfaces 52, 74 was made substantially identical at about 2° when measured along a line parallel to a longitudinal axis of the fitting body 40 or the sleeve 60.

Self-holding machine taper at the tapered inner and outer surfaces 50, 74 permits disassembly as desired to adjust the positioning of the fitting body 40, the fusible sleeve 60 and/or the pipe prior to proceeding to the following step, involving electrofusion. Specifically, a pair of U-shaped induction coils (ceramic coated U coils available from Magneforce, Inc., Warren, OH, the United States) are placed on opposing sides around the fusible sleeve 60 to induction heat and melt the sleeve 60 provided with stainless steel fiber, and the sleeve 60 is allowed to cool and solidified, thereby fusing the fitting body 40 and the pipe.

It has been appreciated that electrofusion of the fitting body 40 and the pipe may be performed without necessarily requiring external clamps or tools with the presence of the tapered inner and outer surfaces 50, 74, while permitting for disassembly and reassembly of the fitting body 40 and the fusible sleeve 60 prior to electrofusion, as needed for desired adjustments, which may not be possible with interference fit.

While the invention has been described with reference to preferred embodiments, the invention is not or intended by the applicant to be so limited. A person skilled in the art would readily recognize and incorporate various modifications, additional elements and/or different combinations of the described components consistent with the scope of the invention as described herein.

## Claims

1. A pipe fitting comprising a coupling body having an open end and a fusible sleeve sized to be received at the open end for engagement of a pipe thereto, the coupling body comprising a sidewall defining an internal bore sized for receiving at least a portion of the pipe with the fusible sleeve interposed between the sidewall and the pipe in an engaged position, the fusible sleeve having a tapered outer surface for frictional engagement with an inner surface of the sidewall, wherein the fusible sleeve comprises a thermoplastic material and an electrically conductive material combined with the thermoplastic material, the electrically conductive material being located to heat or melt the thermoplastic material upon induction heating of the electrically conductive material, thereby joining the coupling body and the pipe in the engaged position.

2. The pipe fitting of claim 1, wherein the coupling body comprises an elbow, a sweep elbow, a coupling, a reducer, a tee, a cross, a wye or a cap, or wherein the coupling body comprises a cap.

3. The pipe fitting of claim 1 or claim 2, wherein the thermoplastic material comprises one or more selected from the group consisting of polyacrylic acid, poly(methyl methacrylate) (PMMA), acrylonitrile butadiene styrene (ABS), polyamide, polylactic acid, polybenzimidazole (PBI), polycarbonate (PC), polyether sulfone (PES), polyoxymethylene (POM), polyether ether ketone (PEEK), polyetherimide (PEI), polyphenylene oxide (PPO), polyphenylene sulfide (PPS), polystyrene, polypropylene, polyvinyl chloride (PVC), chlorinated PVC (CPVC), polyvinylidene fluoride (PVDF) and polytetrafluoroethylene (PTFE), or wherein the thermoplastic material comprises polypropylene.

4. The pipe fitting of any one of claims 1 to 3, wherein the electrically conductive material comprises one or more of copper, aluminum, iron, tungsten, chromium, nickel, cobalt, platinum, silver, gold, carbon black, carbon fiber, graphite, graphene and carbon nanotube, or wherein the electrically conductive material comprises stainless steel or stainless steel fiber dispersed in the thermoplastic material.

5. The pipe fitting of any one of claims 1 to 4, wherein the fusible sleeve comprises first and second axial ends, the first axial end being for placement proximate to a longitudinal end of the pipe relative to the second axial end in the engaged position, wherein the fusible sleeve tapers towards the first axial end.

6. The pipe fitting of claim 5, wherein the fusible sleeve tapers towards the first axial end at a tapering angle between about 0.01° and about 7°, the tapering angle being measured along a line parallel to a longitudinal axis of the fusible sleeve.

7. The pipe fitting of claim 5 or claim 6, wherein the fusible sleeve further comprises a seating flange extending inwardly at the first axial end, the seating flange being shaped for seated engagement of the longitudinal end of the pipe thereto in the engaged position.

8. The pipe fitting of any one of claims 5 to 7, wherein the fusible sleeve defines a plurality of notches at the first axial end along a periphery thereof, the plurality of notches extending towards the second axial end.

9. A fusible sleeve for electrofusion of a pipe and a pipe fitting, the pipe fitting comprising a coupling body having an open end, the coupling body comprising a sidewall defining an internal bore sized for receiving at least a portion of the pipe with the fusible sleeve interposed between the sidewall and the pipe in an engaged position at the open end,
wherein the fusible sleeve has a tapered outer surface for frictional engagement with an inner surface of the sidewall, and the fusible sleeve comprises a thermoplastic material and an electrically conductive material combined with the thermoplastic material, the electrically conductive material being located to heat or melt the thermoplastic material upon induction heating of the electrically conductive material to thereby join the coupling body and the pipe in the engaged position.

10. The fusible sleeve of claim 9, wherein the coupling body comprises an elbow, a sweep elbow, a coupling, a reducer, a tee, a cross, a wye or a cap, or wherein the coupling body comprises a cap.

11. The fusible sleeve of claims 9 or claim 10, wherein the thermoplastic material comprises one or more selected from the group consisting of polyacrylic acid, poly(methyl methacrylate) (PMMA), acrylonitrile butadiene styrene (ABS), polyamide, polylactic acid, polybenzimidazole (PBI), polycarbonate (PC), polyether sulfone (PES), polyoxymethylene (POM), polyether ether ketone (PEEK), polyetherimide (PEI), polyphenylene oxide (PPO), polyphenylene sulfide (PPS), polystyrene, polypropylene, polyvinyl chloride (PVC), chlorinated PVC (CPVC), polyvinylidene fluoride (PVDF) and polytetrafluoroethylene (PTFE), or wherein the thermoplastic material comprises polypropylene.

12. The fusible sleeve of any one of claims 9 to 11, wherein the electrically conductive material comprises one or more of copper, aluminum, iron, tungsten, chromium, nickel, cobalt, platinum, silver, gold, carbon black, carbon fiber, graphite, graphene and carbon nanotube, or wherein the electrically conductive material comprises stainless steel or stainless steel fiber dispersed in the thermoplastic material.

13. The fusible sleeve of any one of claims 9 to 12, wherein the fusible sleeve comprises first and second axial ends, the first axial end being for placement proximate to a longitudinal end of the pipe relative to the second axial end in the engaged position, wherein the fusible sleeve tapers towards the first axial end.

14. The fusible sleeve of claim 13, wherein the fusible sleeve tapers towards the first axial end at a tapering angle between about 0.01° and about 7°, the tapering angle being measured along a line parallel to a longitudinal axis of the fusible sleeve.

15. The fusible sleeve of claim 13 or claim 14, wherein the fusible sleeve further comprises a seating flange extending inwardly at the first axial end, the seating flange being shaped for seated engagement of the longitudinal end of the pipe thereto in the engaged position.

16. The fusible sleeve of any one of claims 13 to 15, wherein the fusible sleeve defines a plurality of notches at the first axial end along a periphery thereof, the plurality of notches extending towards the second axial end.
